(19)

Europäisches
Patentamt
European
Patent Office
Office européen
des brevets

(11) **EP 3 973 775 A1**

(12) **EUROPEAN PATENT APPLICATION**

(43) Date of publication:
**30.03.2022 Bulletin 2022/13**

(51) International Patent Classification (IPC):
**A01M 21/04** *(2006.01)*

(21) Application number: **20197649.5**

(52) Cooperative Patent Classification (CPC):
**A01M 21/046**

(22) Date of filing: **23.09.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ubiqutek Ltd.**
**Kingstanding, Birmingham B44 8LS (GB)**

(72) Inventors:
 • **DIPROSE, Andrew**
  **London, Greater London N1 5LQ (GB)**
 • **DIPROSE, Robert**
  **Birmingham, West Midlands B44 8LS (GB)**
 • **DIPROSE, Michael**
  **Hope Valley, Derbyshire S32 3XB (GB)**
 • **KENNARD, James**
  **Birmingham, West Midlands B44 8LS (GB)**

(74) Representative: **reuteler & cie SA**
**Chemin de la Vuarpillière 29**
**1260 Nyon (CH)**

(54) **APPARATUS AND METHOD FOR ELECTRICALLY KILLING PLANTS**

(57) Electrical apparatus to kill a plant or at least attenuate plant growth, the apparatus comprising: an electrical energy supply unit; an applicator unit comprising an applicator electrode; a return unit comprising a return electrode; the electrical energy supply unit arranged to apply electrical energy through a transmission circuit comprising the applicator electrode, a plant, and the return electrode, a Faraday enclosure arranged to block electromagnetic radiation emitted from the electrical energy.

Figure 7

## Description

## TECHNICAL FIELD

The present disclosure relates to electric apparatus that is configured to attenuate plant growth by the application of electrical energy thereto.

## BACKGROUND

In properties both commercial and domestic, it is common to kill or at least control the growth of unwanted plants, commonly referred to as weeds. Conventional methods include treatment with a pesticide or more particularly a herbicide. However, there is a growing concern over such treatment for environmental reasons and unwanted exposure of herbicides to humans and animals. Moreover, weeds are increasingly becoming naturally resistant so herbicides are becoming more and more ineffective. As a result of these numerous drawbacks, the use of herbicides is increasingly prohibited.

Consequently, there is a desire for alternative treatments, which do not include the above drawbacks. An example includes treatment by the application of electrical energy. US 4338743 discloses a respective apparatus, wherein electrical energy is applied at 14.4 kV at about 60 Hz to plants. Such apparatus has failed to become widespread in the market over concern over safety. For example, the high voltage may be a risk to a person in proximity to a treated weed.

Moreover, such apparatus has been found to interfere with other electrical equipment proximal the apparatus, which has led to the apparatus not being certified for use in certain areas, e.g. on railway lines, proximal which there is sensitive electronic equipment that is used for signalling and communication on a railway system.

Therefore, in spite of the effort already invested in the development of said apparatus further improvements are desirable.

## SUMMARY

The present disclosure provides electrical apparatus to kill a plant or at least attenuate plant growth. The apparatus includes an electrical energy supply unit; an applicator unit comprising one or more applicator electrodes, and; a return unit comprising one or more return electrodes. The electrical energy supply unit is arranged to apply electrical energy through a transmission circuit comprising the or each applicator electrode and the or each return electrode and a plant.

In embodiments, the apparatus implements a Faraday enclosure (sometimes also referred to as Faraday cage or Faraday shield) arranged to block electromagnetic radiation emitted from the electrical energy.

By implementing a Faraday enclosure, the apparatus implements electromagnetic shielding to block electromagnetic radiation emitted from the electrical energy. In particular, it has been found that the electrical energy may include high-frequency noise, that emits the electromagnetic radiation. The noise may be introduced from components of the electrical energy supply unit, e.g. from one or more of: a waveform shaping system that can implement harmonics/ringing when forming waveforms in the electrical energy; a rectifier; a transformer. The noise may be introduced from electrical arcs, e.g. due to electron movement in the plasma of the arc that emits wideband electromagnetic magnetic radiation. This high frequency noise has been found to emit electromagnetic frequency that can interfere with electrical componentry proximal the apparatus, e.g. componentry of railway systems for signalling or communications. Such interference may prohibit the use of electrical apparatus to kill plants proximal areas where there is sensitive electrical equipment, e.g. railway systems and highways. The Faraday enclosure has been found to be particularly effective in attenuating this electromagnetic radiation.

In embodiments, the Faraday enclosure is arranged to block electromagnetic radiation emitted from the electrical energy proximal to and through the or each applicator electrode and/or the or each return electrode.

As used herein the term "proximal to" in respect of an electrode (the applicator or return electrode) may refer to one or more of: the electrical energy transmitted through the transmission circuit between the applicator electrode and plant, including as an electrical arc; the electrical energy transmitted through the transmission circuit between the return electrode and plant, including as an electrical arc; the electrical energy transmitted within a predetermined radii of an electrode, which may be 1m or 50cm or 20cm or 10cm.

By implementing the Faraday enclosure to attenuate the electromagnetic radiation from the electrical energy as it travels through to one or more of: through the applicator electrode; to the plant from the applicator electrode; through the plant; though the return electrode; and any other portions of the transmission circuit between the applicator electrode and return electrode that are above the ground, the amount of electromagnetic radiation emitted from the apparatus is reduced.

In embodiments, the Faraday enclosure is arranged to block electromagnetic frequencies of: 30 MHz - 6 GHz so that they are below 60 or 50 or 40 dB($\mu$V/m) when measured 10 m away from the applicator electrode or the return electrode by a spectrum analyser. By implementing the Faraday enclosure to block electromagnetic frequencies of this range, it has been found that limited interference is provided to electrical equipment proximal a railway line or a highway. As used herein the term "proximal" in respect of a railway or highway may refer to a position within 10 or 5 or 2 meters of a railway line.

In embodiments, the Faraday enclosure is arranged to block electromagnetic frequencies of 30 to 230 MHz so that they are below 60 or 50 or 40 dB($\mu$V/m)

when measured 10 m away from the applicator electrode or the return electrode, and/or: 230 MHz to 6 GHz so that they are below 60 or 50 or 40 dB($\mu$V/m) when measured 10 m away from the applicator electrode or the return electrode.

In embodiments, the Faraday enclosure is formed of a material with a magnetic relative permeability of at least 0.99 or 0.99 to 1,000,000 (dimensionless). In embodiments, the Faraday enclosure is formed of a material with an electrical resistivity of less than 500,000 x $10^{-8}$ $\Omega \cdot$m or 1.5 x $10^{-8}$ to 500,000 $10^{-8}$ $\Omega \cdot$m. By implementing a material with a magnetic relative permeability and electrical resistivity of these ranges, it has been found that the Faraday enclosure can block electromagnetic radiation such that limited interference is provided to electrical equipment proximal a railway line or a highway.

In embodiments, the thickness (t) in m of the Faraday enclosure is defined by the relationship:

t > 3*D*, in particular t > 5*D*,

$$D = \sqrt{\frac{1}{F \cdot P \cdot C \cdot \pi}},$$

wherein F is the frequency in Hz, P is the magnetic permeability in H/m, which is calculated by multiplying the relative magnetic permeability $\mu_r$ (dimensionless) by the permeability constant $\mu_0$ in H/m, and C is the electrical conductivity in S/m. In embodiments wherein the Faraday enclosure is arranged as multiple layers, the thickness t can be the aggregated thickness of the individual layers. It has been found that a thickness within this range provides suitable blocking of the electromagnetic radiation emitted from the apparatus.

In embodiments, the material of the Faraday enclosure has a thickness of 0.01 mm to 10 mm or 0.05 mm to 5 mm or 0.1 mm to 3 mm.

In embodiments, the material is metal based, and may include one or more of: copper; brass; nickel; gold; silver; steel; tin; permalloy; aluminium; ferrite; supermalloy; stainless steel; other metal based material. In embodiments, the material is non-metal based, and may include one or more of: carbon (in particular as graphite, carbon nanotubes, and/or carbon fibre); silicon carbide; conductive paints (which may include metal particles); other conductive or semi-conductive materials.

In embodiments, the Faraday enclosure is arranged with a first layer and a second layer. By implementing multiply layers, blocking of the electromagnetic radiation may be optimised, for example, for the first layer a particular material (e.g. including tin, permalloy or supermalloy) may be selected to block lower frequencies, and for the second layer a particular different material (e.g. including copper or aluminium or brass) may be selected to block higher frequencies.

In embodiments, a gap is arranged between the first layer and second layer. The gap may be 0.25 mm to 100 mm, or 0.5 mm to 50 mm or 2 - 8 mm. The gap may be occupied by air or a vacuum or other material. By implementing a gap the electromagnetic radiation has two absorptions (i.e. through the first layer and second later) and four reflections (i.e. there are four layer/air interfaces) as opposed to one absorption and two reflections that may be achieved by an equivalent single layer. This may have an enhanced effect in reducing the amount of electromagnetic radiation that is transmitted though the Faraday enclosure.

In embodiments, a carrier is implemented to carry the Faraday enclosure. The carrier may be implemented as a layer (e.g. the first layer and optional second layer are connected to the carrier layer). Alternatively, the second layer may be implemented as the carrier layer. In embodiments, an electrically insulating material (including glass fibre) is implemented as the carrier. By implementing the carrier, the Faraday enclosure may be structurally supported and protected from damage.

In embodiments, the carrier layer is arranged as an exterior layer such that the Faraday enclosure is not visible from an exterior of the apparatus. By implementing the carrier layer to form an exterior surface of the apparatus the Faraday enclosure is not externally visible.

In embodiments, electrical circuity is arranged to electrically connect the Faraday enclosure to the ground. By connecting the Faraday enclosure to the ground, electrical energy that contacts the Faraday enclosure (e.g. by means of electrical arcs or sparking) can be transmitted through the Faraday enclosure and into the ground. It may then be transferred through the ground to the return electrode and back to the transmission circuit. Accordingly, the electric energy that leaks in this way is safely returned to the transmission circuit.

In embodiments, a Faraday earth electrode is arranged to physically contact the ground, the Faraday earth electrode electrically connected by the electrical circuitry to the Faraday enclosure. As used herein the term "physically contact the ground" may refer to an electrode that is configured to rest on and/or insert into the ground such that an electrically conductive connection is made.

In embodiments, the Faraday enclosure is isolated (e.g. it is not physically connected to the ground) from the ground.

In embodiments, the Faraday enclosure is electrically isolated from the transmission circuit. By electrically isolating the Faraday enclosure from the transmission circuit, the electrical energy of the transmission circuit is less likely to arc, spark or otherwise short to the Faraday enclosure than to a plant.

In embodiments, the Faraday enclosure is arranged to substantially surround the applicator electrode and/or the return electrode. As used herein the term "substantially surround" in respect of the electrode may refer to the electrode being covered so that it is not visible in normal use, e.g. the electrode may be covered when viewed from all angles except the bottom (where a treatment mouth may be located), which in normal use is blocked by the ground. Substantially surround may refer to the Faraday enclosure extending around the electrodes, e.g. on at least two sides thereof.

In embodiments, the Faraday enclosure is arranged with a treatment mouth to receive a plant for treatment. By implementing a treatment mouth that is arranged to receive plants that extend from the ground, plants can enter the Faraday enclosure for treatment with the electrical energy.

In embodiments, (e.g. except for the portion of the Faraday enclosure that comprises the treatment mouth) the Faraday enclosure is arranged to entirely enclose the or each applicator electrode and the or each return electrode without there being a gap or aperture greater than 50 cm or 25 cm diameter or 10 cm (or the equivalent area for a non-circular aperture) or there are no gaps. By implementing a Faraday enclosure without substantial gaps being greater than the gaps as defined by these ranges, suitable blocking of the electromagnetic radiation may be provided.

In embodiments, the Faraday enclosure includes a movable portion which is movable to facilitate insertion of a plant into the treatment mouth. By implementing a movable portion, e.g. a flexible or pivoted portion, the Faraday enclosure can be adapted so that plants are more conveniently received in the treatment mouth.

In embodiments, a movable portion is arranged to facilitate insertion of the plant into the treatment mouth. The movable portion may facilitate said insertion as the or each applicator electrode is moved in a treatment direction, e.g. the movable portion is arranged on a front surface of the Faraday enclosure that is perpendicular to the treatment direction.

In embodiments, the Faraday enclosure is arranged to extend along the ground. By having the Faraday enclosure extend across the ground the surface area of the treatment mouth may be minimised to enhance blocking of electromagnetic radiation. As used herein the term "along the ground" may refer to a substantial portion (e.g. a plate or flap) that is aligned to the ground in use (rather than, for example, an edge of a side portion of the Faraday enclosure).

In embodiments, the Faraday enclosure is arranged to cover the applicator and/or return electrode when viewed perpendicular to one or more of the following viewing planes: a viewing plane that is above the Faraday enclosure/apparatus and parallel to a surface that the apparatus is arranged on; a viewing plane, which is defined by a vector parallel to a direction of treatment along which the applicator electrode is moved during treatment and a vector which is perpendicular to a surface that the apparatus is arranged on, and; a viewing plane, which is normal to a vector parallel to a direction of treatment along which the applicator electrode is moved during treatment. As used herein the term "cover" in respect of the electrode may refer to the material of the Faraday enclosure overlapping the electrode when it is viewed from the relevant plane, e.g. so that it is not visible.

In embodiments, a material of the Faraday enclosure is arranged as a Faraday shield with a continuous covering of electrically conductive material.

In embodiments, a material of the Faraday enclosure is arranged as a Faraday cage with a covering of electrically conductive material that comprises a plurality of apertures. In embodiments, the aperture sizes are: 0.1 mm to 60 mm, or 0.25 mm to 40 mm, 0.5 mm to 20 mm. By implementing apertures, the Faraday enclosure may be light weight whilst retaining sufficient blocking of the electromagnetic radiation. It may also be possible to visualise a treatment process from external to the Faraday enclosure, e.g. to check for arcing and/or fire.

The present disclosure provides a vehicle comprising the apparatus of any preceding claim. The vehicle may be suitable for running on rails of a railway system, wherein the applicator electrode is arranged to apply the electrical energy to a plant proximal the rails. The vehicle may be suitable for running on roads of a highway system, wherein the applicator electrode is arranged to apply the electrical energy to a plant proximal the road. The vehicle may be suitable for running on fields, wherein the applicator electrode is arranged to apply the electrical energy to a plant arranged in the field.

The present disclosure provides use of the apparatus as disclosed herein for treatment of a plant, e.g. to kill or weaken the plant. The use may implement any feature of the preceding embodiments or another embodiment disclosed herein.

The present disclosure provides a method of treating a plant with electrical energy. The method comprises applying electrical energy to a plant and blocking with a Faraday enclosure electromagnetic radiation emitted from the electrical energy. The method may comprise applying electrical energy to the plant whilst moving along rails of a railway system or moving along a road of a highway system. The method may implement any feature of the preceding embodiments or another embodiment disclosed herein.

The preceding summary is provided for purposes of summarizing some embodiments to provide a basic understanding of aspects of the subject matter described herein. Accordingly, the above-described features are merely examples and should not be construed to narrow the scope or spirit of the subject matter described herein in any way. Moreover, the above and/or proceeding embodiments may be combined in any suitable combination to provide further embodiments. Other features, aspects, and advantages of the subject matter described herein will become apparent from the following Detailed Description, Figures, and Claims.

## BRIEF DESCRIPTION OF THE FIGURES

Aspects, features and advantages of embodiments of the present disclosure will become apparent from the following description of embodiments in reference to the appended drawings in which like numerals denote like elements.

Figure 1 is a block system diagram showing embodiment electrical apparatus to attenuate plant growth.

Figure 2 is a schematic diagram showing the apparatus of figure 1.

Figure 3 is a schematic diagram showing an applicator unit of the apparatus of figure 1.

Figure 4 is a schematic diagram showing a return unit of the apparatus of figure 1.

Figure 5 is a schematic diagram showing an electrical energy supply unit and a Faraday enclosure of the apparatus of figure 1.

Figure 6 is an illustrative cross-sectional view of embodiments of the Faraday enclosure of figure 5.

Figure 7 is a perspective view of the apparatus of figure 1 arranged on a vehicle for use on rails.

Figure 8 is a side view of part of the Faraday enclosure of the apparatus of figure 7.

Figure 9 is a perspective view of the apparatus of figure 1 arranged on a vehicle for use on roads.

Figure 10 is a side view of the apparatus of figure 1 arranged for hand held use.

Figure 11 is an enlarged view of the Faraday enclosure of the apparatus of figure 10.

**DETAILED DESCRIPTION OF EMBODIMENTS**

Before describing several embodiments of the apparatus, it is to be understood that the system is not limited to the details of construction or process steps set forth in the following description. It will be apparent to those skilled in the art having the benefit of the present disclosure that the system is capable of other embodiments and of being practiced or being carried out in various ways.

The present disclosure may be better understood in view of the following explanations:

As used herein, the term **"railway system"** may refer to a system comprising a network of rails located on tracks for wheeled vehicles running on the rails for transferring passengers and goods. It may include various systems for electrical power transmission, signalling, communication etc.

As used herein, the term **"highway system"** may refer to a system comprising a network of roads for wheeled vehicles running on the roads for transferring passengers and goods. It may include various systems for electrical power transmission, signalling, communication etc.

As used herein, the term **"vehicle"** may refer to a machine that is capable of traveling on various mediums including: rails; roads; fields; or other medium.

As used herein, the term " **Faraday enclosure"** or **"electromagnetic shielding"** may refer to an arrangement of material that when an interior of the enclosure is exposed to an electrical field (e.g. electromagnetic radiation) it causes electric charges within the material to be distributed so that the charges cancel the effect of the electrical field effect external the enclosure.

As used herein, the term **"block"** or **"attenuate"** may refer to a full or substantial reduction of propagated electromagnetic radiation by the Faraday enclosure.

As used herein, the term **"plant"** or **"weed"** may refer to an undesired plant in a human controlled setting, such as a farm field, garden, lawn or park. A weed may refer to a multicellular photosynthetic eukaryote.

As used herein, the term **"electrical arc"** or **"arc"** may refer to an electrical breakdown of a gas that produces an electrical discharge. An arc is formed by an electrical current through a normally nonconductive medium such as air, and is characterized by a plasma, which may produce visible light. An arc discharge is characterized by a lower voltage than a glow discharge and relies on thermionic emission of electrons from the electrodes supporting the arc.

As used herein, the term **"electrical energy"** or **"processed electrical energy"** may refer to electrical energy supplied by an electrical energy supply unit and applied to the plant, e.g. though a transmission circuit. The electrical energy may comprise a periodic or aperiodic waveform, i.e. a waveform that continuously repeats with the repeating units therein having a constant or a varying period, e.g. a pulsed wave with a fixed duty cycle or a varying duty cycle. The shape of the repeating unit may be one of or a combination of one or more of the following forms: sine wave; saw-tooth wave; triangular wave; square wave; pulsed, e.g. DC pulsatile, half-wave rectified; other known form. The exact shape of the repeating unit may be an approximation of one of the aforesaid forms for reasons of distortion, e.g. overshoot/undershoot and the associated ringing and settle time. The repeating unit may be positive or negative or a combination thereof with respect to a selected reference value, which is typically earth or the 0 V of the voltage supply but may be another positive or negative voltage level. The frequency of the waveform may be above 25 Hz, above 1 khz, above 10 kHz, above 18 kHz or above 25 kHz. The maximum frequency may be 1 mHz. It will be understood that when referring to the voltage of the electrical energy, when the electrical energy has a waveform, the voltage is in respect of a suitable quantity, such as RMS, peak or other. The same applies for other electrical quantities such as power and current.

As used herein, the term **"electrical energy supply unit"** may refer to any unit or system, including a distributed system, for generating and/or conditioning electrical energy for supply to a transmission circuit which, in use, incorporates a plant.

As used herein, the term **"electrical circuitry"** or **"electric circuitry"** or **"electronic circuitry"** or **"circuitry"** or **"control circuitry"** may refer to, be part of, or include one or more of the following or other suitable hardware or software components: an Application Specific Integrated Circuit (ASIC); electronic/electrical circuit (e.g. passive electrical components, which may include combinations of transistors, transformers, resistors, capacitors); a processor (shared, dedicated, or group); a memory (shared, dedicated, or group), that may execute one or more software or firmware programs; a combinational logic circuit. The electrical circuitry may be centralised on the apparatus or distributed, including distributed on board the apparatus and/or on one or more components in communication with the apparatus, e.g. as part of the system. The component may include one or more of a: networked-based computer (e.g. a remote server); cloud-based computer; peripheral device. The circuitry may be implemented in, or functions associated with the circuitry may be implemented by, one or more software or firmware modules. The circuitry may include logic, at least partially operable in hardware.

As used herein, the term **"processor"** or **"processing resource"** may refer to one or more units for processing including an ASIC, microcontroller, FPGA, microprocessor, digital signal processor (DSP) capability, state machine or other suitable component. A processor may include a computer program, as machine readable instructions stored on a memory and/or programmable logic. The processor may have various arrangements corresponding to those discussed for the circuitry, e.g. on-board and/or off board the apparatus as part of the system.

As used herein, the term **"applicator unit"** or **"applicator"** may refer to any suitable device for applying electrical energy to a plant, including by direct contact with the plant and/or spark transmission.

As used herein, the term **"earth unit"** or **"return unit"** may refer to any suitable device for receiving electrical energy from a circuit including the plant and optionally the ground to complete a transmission circuit, including by direct contact with the plant and/or spark transmission.

As used herein, the term **"apparatus"** or **"electrical apparatus"** may refer to any combination of one or more of the following for treatment of a plant: electrical energy supply unit; electrical circuitry; applicator unit; applicator electrode; return unit; return electrode; transmission circuit.

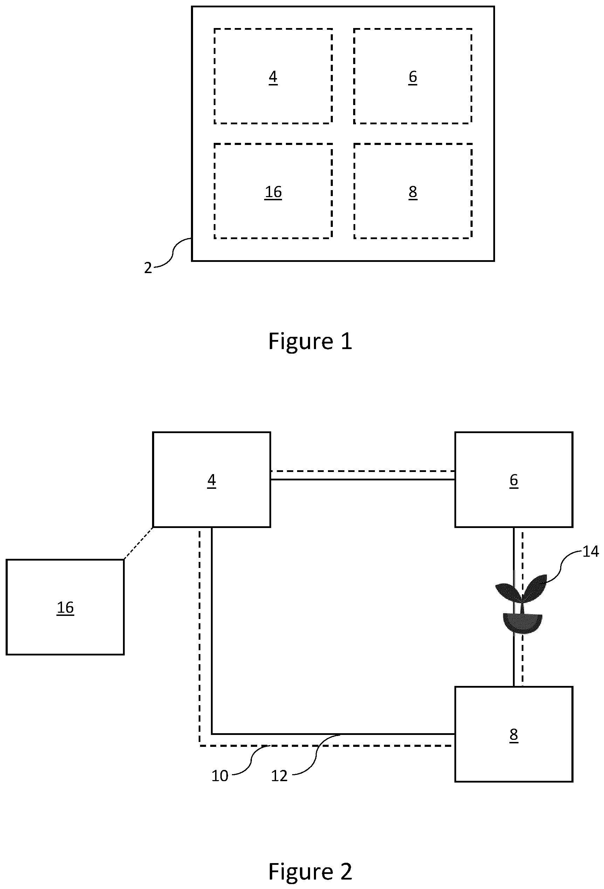

Referring to figures 1 and 2, apparatus **2** to attenuate plant growth, comprises an electrical energy supply unit **4,** an applicator unit **6** and a return unit **8.** The electrical energy supply unit supplies electrical energy **10** around a transmission circuit **12,** which includes the applicator unit **6,** return unit **8.**

The transmission circuit **12,** when treating a plant, may include said plant **14.** It will be understood that depending on the operative arrangement of the applicator unit and return unit, a return path of the transmission circuit **12** optionally includes other matter, such as proximal earth and fluid (e.g. air and moisture) to the plant.

The apparatus **2** includes electrical circuitry **16,** which may implement a range of control operations. In embodiments, said circuitry **16** is operable to control the electrical energy supplied by the electrical energy supply unit **4** through the transmission circuit **12,** as will be discussed.

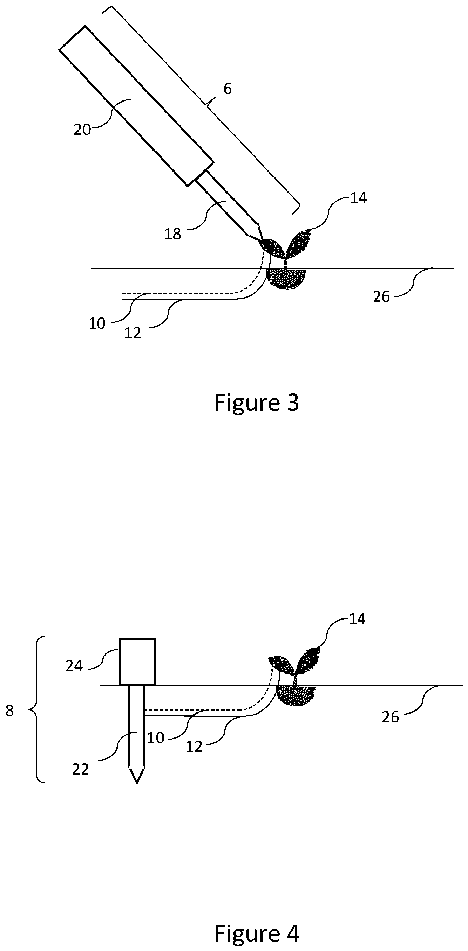

Referring to figure 3, the applicator unit **6** is adapted to receive electrical energy **10** from the electrical energy supply unit **4** and to transmit said electrical energy **10** to the plant **14** (shown in figure 2). The applicator unit **6** comprises an applicator electrode **18.** The applicator electrode **18** is electrically connected to the electrical energy supply unit **4** by an electrically conductive material, e.g. by wiring or solid material, which forms part of the transmission circuit **12.**

The applicator electrode **18** is adapted to apply the electrical energy **10** to the plant **14.** In embodiments, the applicator electrode **18** is arranged for direct contact with the plant **14.** As used herein "direct contact" may refer to physical contact between the plant and electrode, and may be achieved by operatively arranging the electrode to be exposed from a body of the applicator. The applicator electrode **18** comprises an electrically conductive material e.g. copper, zinc, bronze, brass, aluminium or steel.

The geometric configuration of the applicator electrode **18** may be selected depending on the intended treatment regimen, for example: a rod for sweeping through areas of dense plants; a hook-shape for separating plants.

The applicator unit **6** comprises body **20** to carry the applicator electrode **18.** The body **20** may be adapted to be held by a user or fixed to a chassis depending on the particular configuration of the apparatus **2** (e.g. adapted for domestic or agricultural implementation respectively).

In embodiments, which are not illustrated, the applicator electrode is implemented as a plurality of electrodes, e.g. for treatment of multiple plants at a given moment.

Referring to figure **4,** the return unit **8** is adapted to receive electrical energy **10** from the applicator unit **6** via the plant **14** (shown in figure 2). The return electrode **22** is electrically connected to the electrical energy supply unit **4** by an electrically conductive material, e.g. by wiring or solid material, which forms part of the transmission circuit **12.**

The return electrode **22** is adapted to provide a return for electrical energy **10** via the plant **14** to complete the transmission circuit **12.** In embodiments, the return electrode **22** is arranged for direct contact with the ground **26** (shown in figure 4). As used herein "direct contact" may refer to physical contact between the ground and electrode, and may be achieved by operatively arranging the electrode to be exposed from a body of the return unit. The return electrode **18** comprises an electrically conductive material e.g. copper, zinc, bronze, brass, aluminium or steel.

The geometric configuration of the return electrode may be selected depending on the intended implementation of the apparatus, for example: an implement for insertion into the ground (e.g. for apparatus that in use remains in a generally fixed position), such as a rod or spike; an implement for movement along the ground (e.g. for apparatus that in use has a variable position), such as a rod or spike), such as a flat plate or roller, and; a combination of the aforesaid implementations.

The return unit **8** comprises body **24** to carry the return electrode **22.** The body **24** may be adapted to be held by a user or fixed to a chassis depending on the particular configuration of the apparatus **2** (e.g. adapted for domestic or agricultural implementation respectively).

In embodiments, which are not illustrated, the return electrode is implemented as a plurality of electrodes, e.g. for treatment of multiple plants at a given moment.

Generally, the apparatus **2** is arranged with the return electrode **22** arranged in operative proximity to the applicator electrode **18.** Operative proximity may refer to a geometric arrangement to limit the path of the electrical energy **10** through the ground **26,** which may advantageous for reasons of efficient and/or electrical safety.

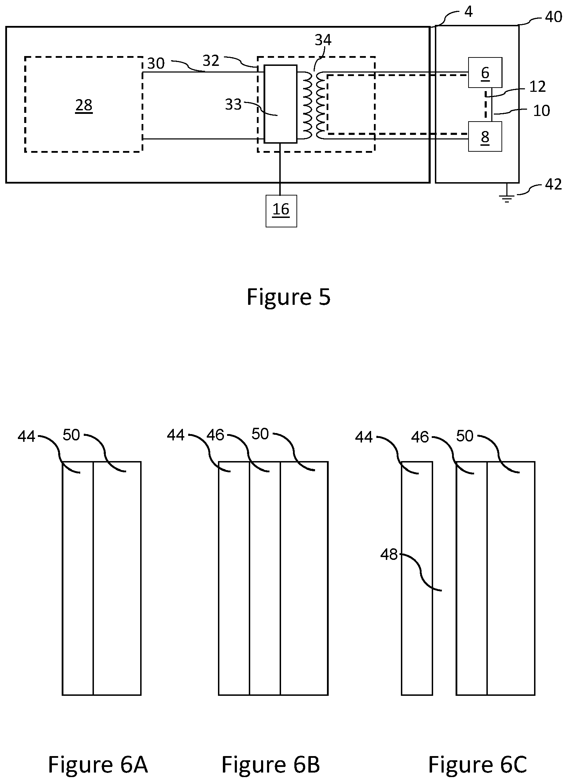

Referring to figure 5, the electrical energy supply unit **4** is arranged to supply processed electrical energy **10** to the transmission circuit **12.** The electrical energy supply unit **4** includes a power supply **28** for supply of supply electrical energy **30.** The power supply **28** may be implemented as one or more of the following: a battery; a fuel cell; a generator, including an internal combustion engine powered generator, which may be implemented with a dedicated internal combustion engine or a shared internal combustion engine for other agricultural equipment, e.g. a tractor, which is arranged to drive the generator; other like. The power supply **28** provides supply electrical energy **30,** in alternating current (AC) or direct current (DC), including pulsated or with other form with a fixed quantity, e.g. in one or more or power; voltage; current; frequency; phase.

The electrical energy supply unit **4** includes an electrical energy processing unit **32** for processing of the supply electrical energy **30** to the electrical energy **10.** The electrical energy processing unit **32** includes an electrical transformer **34** with appropriately configured windings, e.g. for step-up or step down, depending on the configuration of the supply electrical energy **30** and desired output of the electrical energy **10.**

In variant embodiments, which are not illustrated, alternative step-up or step-down converters to the transformer are implemented, e.g. a boost converter, other amplifier topology. A step-up or step-down converter may also be obviated if the electrical energy is supplied in the desired form. For example, the transformer may be obviated if the electrical energy is supplied in the desired form by: the power supply; or the power supply is replaced by an input unit to receive a commercial or domestic electrical supply (a mains supply).

Where the power supply **28** provides supply electrical energy **30** as AC (e.g. the power supply **28** is arranged as a generator) or the power supply **28** is omitted and there is an input unit comprising a circuit for receiving an electrical supply (e.g. from a mains electrical supply or other electrical supply) the electrical energy processing unit **32** includes a AC to DC converter (not illustrated) arranged to provide a DC current to a waveform shaping system, which may be referred to as a switching system **33.** Where the power supply **28** provides supply electrical energy **30** as DC, e.g. a battery, an AC to DC converter is obviously obviated.

The electrical energy processing unit **32** includes a switching system **33** to generate the desired wave form (e.g. in shape and/or frequency) in the electrical energy supplied to the electrical transformer **34.** The switching system **33** is implemented as an electrically operated switch (e.g. a MOSFET, relay, other transistor).

In variant embodiments of the electrical energy supply unit, which are not illustrated, the power supply (or electrical supply to the input unit) supplies electrical energy of the desired configuration. Accordingly, the electrical energy processing unit is obviated. In other embodiments, the power supply (or input unit) supplies electrical energy which only needs step-up or step-down, in which case the switching system is obviated but the transformer is maintained. In other examples the switching system is present but the step-up or step-down converter is omitted.

The electrical circuitry **16** is implemented to control the electrical energy **10,** through the transmission circuit **12.** Said control may implement control of one or more of the following electrical quantities: electrical potential between the applicator and return electrodes; electrical current control; frequency or duty control; phase.

In the embodiment of figure 5, the electrical circuitry **16** controls the switching system **33** to implement control of the voltage and current by pulse width modulation. The frequency is controlled by the rate of switching. In variant embodiments, which are not illustrated, the electrical quantities can be controlled by other means, e.g. including by changing the taping of the electrical transformer (on the primary and/or secondary coil), which may be implemented as a variable transformer, by introducing capacitance and/or inductance in the transmission circuit.

Referring to figure 5, the apparatus **2** comprises a Faraday enclosure **40,** which is arranged to block electromagnetic radiation (not illustrated) that is emitted from the electrical energy **10.**

The Faraday enclosure **40** is arranged to block the electromagnetic radiation emitted from the electrical energy **10** as it travels through a portion of the transmission circuit **12** that comprises: through the applicator electrode **18;** between the applicator electrode **18** and the return electrode **8,** and; through the return electrode **22.** The portion of the transmission circuit **12** that comprises between the applicator electrode **18** and the return electrode **8** includes through a plant **14,** when one is present and being treated (not illustrated in figure 5). The portion of the transmission circuit **12** that comprises between the applicator electrode **18** and the return electrode **22** includes to and from the plant **14,** and particularly between the applicator electrode **18** and plant **14,** where arcing is most likely to occur.

Although the Faraday enclosure **40** encloses cabling (not illustrated) electrically connecting the electrical energy **10** to the applicator electrode **18** and the return electrode **22,** the cabling is generally electromagnetically shielding cabling.

In variant embodiments, which are not illustrated, the Faraday enclosure is arranged to block electromagnetic radiation form the electrical energy through other portions of the transmission circuit, e.g. it may block the electrical energy through the applicator electrode and from the applicator electrode to the plant rather than the return portion.

As illustrated in figure 5, the Faraday enclosure **40** is electrically isolated from the transmission circuit **12.** A Faraday earth electrode **42** electrically connects the Faraday enclosure **40** to the ground.

In variant embodiments, which are not illustrated, the Faraday enclosure is not physically connected by an electrode to the ground.

Referring to figure 6A, the Faraday enclosure **40** is implemented as a first layer **44** of material that is selected to block electromagnetic radiation.

Referring to figure 6B, the Faraday enclosure **40** is implemented as a first layer **44** and a second layer **46** of material that are selected to block electromagnetic radiation.

Referring to figure 6C, the Faraday enclosure is implemented as a first layer **44** and a second layer **46** of material that are selected to block electromagnetic radiation, with a gap **48** therebetween, the gap is typically an air gap, which is 0.25mm to 100mm, or 0.5mm to 50mm or 2 - 8 mm thick.

In variant embodiments, which are not illustrated, the Faraday enclosure has more than two layers.

The thickness (t) in m of the Faraday enclosure **40** (e.g. the first layer **44** and the optional second layer **46**) may be defined by the relationship:

t > 3D, in particular t > 5D,

$$D = \sqrt{\frac{1}{F \cdot P \cdot C \cdot \pi}} ,$$

wherein F is the frequency in Hz, P is the magnetic permeability in H/m, which is calculated by multiplying the relative magnetic permeability $\mu_r$ (dimen-

sionless) by the permeability constant $\mu_0$, H/m, and C is the electrical conductivity in S/m. Typically the thickness is 0.1 mm to 10 mm or 2 mm to 25 mm.

Referring to figures 6A to 6C a carrier layer **50** is arranged to carry the Faraday enclosure. The carrier layer **50** is implemented as a thick (e.g. 5mm - 10 mm thick) layer of material, to which the Faraday enclosure **40** is connected. The Faraday enclosure **40** can be connected to the carrier layer **50** by an adhesive, a mechanical fixing or other suitable connection (not illustrated). The carrier layer **50** is arranged as exterior surface, e.g. as an exterior layer of a laminate that comprises the Faraday enclosure **40.**

In variant embodiments, which are not illustrated: the carrier is alternatively arranged to carry the Faraday enclosure, e.g. it may comprise mechanical fixings, including brackets; the first and/or second layer may be implemented as the carrier; the carrier can be arranged as an interior layer.

In the examples, the Faraday enclosure **40** is arranged as a Faraday shield with a continuous covering of the first layer **44,** and in embodiments where present the second layer **46.**

In variant embodiments, which are not illustrated, the Faraday enclosure is arranged as a Faraday cage with the first layer (and in embodiments where present the second layer), having a plurality of apertures. The apertures can be: 0.1 mm to 60 mm, or 0.25 mm to 40 mm, 0.5 mm to 20 mm in diameter.

In both examples of a continuous Faraday shield or enclosure or a Faraday cage with apertures, the Faraday enclosure is arranged to enclose the applicator electrodes **18** and return electrodes **22,** without there being a gap of aperture greater than 50 mm in diameter or the equivalent area for a non-circular shape.

Rail implementation of apparatus

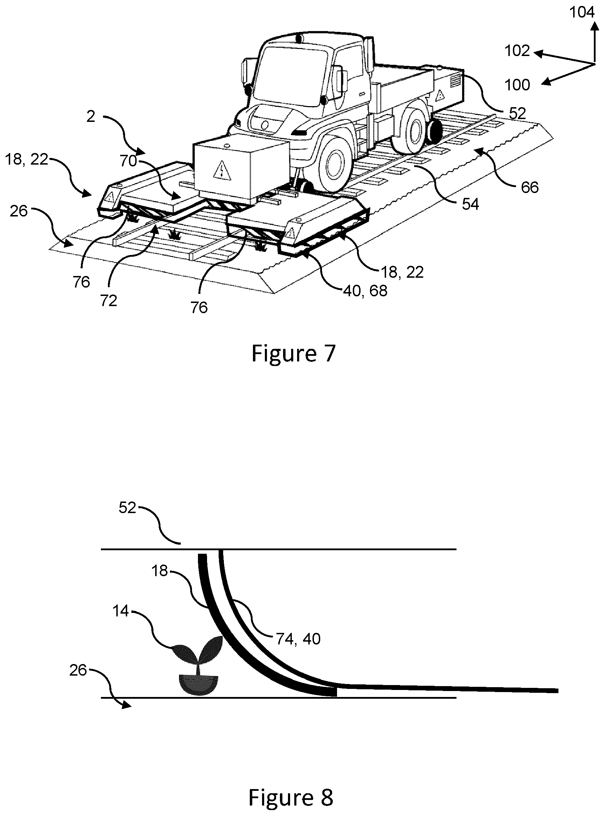

Referring to figure 7, the apparatus **2** is arranged on a vehicle **52** that runs on rails **54** of a railway system **66.** A longitudinal direction **100,** which is a direction of travel of the vehicle is perpendicular to a lateral direction **102,** which are both perpendicular to a height direction **104.**

The Faraday enclosure **40** is arranged to enclose applicator and return electrode pairs **18, 22.** The Faraday enclosure **40** is arranged as a skirt **68** that extends from a carrier **70** to (including proximal to or to abut) the ground **26.**

The Faraday enclosure **40** includes a treatment mouth **72** to receive a plant **26.** There are no other gaps in the Faraday enclosure **40** (excluding those that may implement a Faraday cage, which is discussed later on). As the vehicle **52** moves in the longitudinal direction **100** the plant **26** can enter the treatment mouth **72** or is arranged proximal thereto.

It will be appreciated that the Faraday enclosure

40 can be comprised of portions of the apparatus 2 and/or vehicle 52 when they are composed of an appropriate material (e.g. a chassis or housing) that provides the effect of attenuating the electromagnetic radiation. There is no need to supplement these portions with additional material to form the Faraday enclosure 40, e.g. additional material can be filled in around any gaps to maintain the continuous nature of the Faraday enclosure 40.

The Faraday enclosure 40 therefore surrounds all sides and the top of the electrode pairs 18, 22, such that they are entirely overlapped by the Faraday enclosure 40 when viewed in all directions except the height direction 104, e.g. from underneath the vehicle 52. In this way there is no direct line of sight between the electrode pairs 18, 22 and electrical equipment (not illustrated in figure 7), which is in close proximity to the rails 54.

The electrode pairs 18, 22 are therefore overlapped by the Faraday enclosure 40, when viewed perpendicular to the following planes: a viewing plane that is above and parallel to a surface 26 that the apparatus is arranged on; a viewing plane normal to the longitudinal direction 100; a plane normal the lateral direction 102.

Referring to figure 8, the vehicle 52 includes the Faraday enclosure 40 arranged to extend along the ground 26. The Faraday enclosure 40 includes a ground extending member 74 that trails the applicator electrode 18. The ground extending member 74 portion of the Faraday enclosure 40 can be made from a flexible material, including a thin metal layer deposited on a flexible carrier layer, such as rubber.

In variant embodiments, which are not illustrated: the ground extending member is alternatively arranged, e.g. as a rigid plate; ground extending member is omitted.

Referring to figure 7, the Faraday enclosure 40 includes a movable front portion 76, which is movable to facilitate insertion of the plant 14 into the treatment mouth 72. The front portion 76 is made from a flexible material, including a thin metal layer deposited on a flexible carrier layer, such as rubber.

In variant embodiments, which are not illustrated: the movable front portion is made from a rigid material which is pivotably connected to the vehicle; the movable portion is omitted; other portions of the Faraday enclosure are implemented as movable, including the back portion (not illustrated) which is arranged opposed the front portion.

Agricultural/Road implementation of apparatus

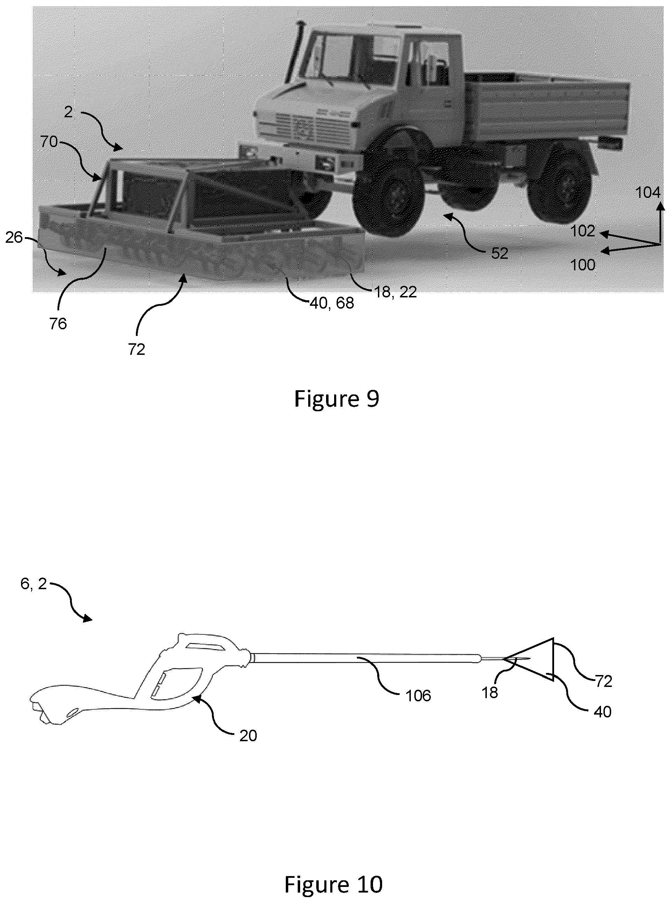

Referring to figure 9, the apparatus 2 is arranged on a vehicle 52 that runs on a road or an agricultural surface including a field. A longitudinal direction 100, which is a direction of travel of the vehicle is perpendicular to a lateral direction 102, which are both perpendicular to a height direction 104.

The Faraday enclosure 40 is arranged to enclose applicator and return electrode pairs 18, 22. The Faraday enclosure 40 is arranged as a skirt 68 that extends from a carrier 70 to (including proximal to or to abut) the ground 26.

The Faraday enclosure 40 includes a treatment mouth 72 to receive a plant 26. There are no other gaps in the Faraday enclosure 40 (excluding those that may implement a Faraday cage, which is discussed later on). As the vehicle 52 moves in the longitudinal direction 100 the plant 26 can enter the treatment mouth 72 or is arranged proximal thereto.

It will be appreciated that the Faraday enclosure 40 can be comprised of portions of the apparatus 2 and/or vehicle 52 when they are composed of an appropriate material (e.g. a chassis or housing) that provides the effect of attenuating the electromagnetic radiation. There is no need to supplement these portions with additional material to form the Faraday enclosure 40, e.g. additional material can be filled in around any gaps to maintain the continuous nature of the Faraday enclosure 40.

The Faraday enclosure 40 therefore surrounds all sides and the top of the electrode pairs 18, 22, such that they are entirely overlapped by the Faraday enclosure 40 when viewed in all directions except the height direction 104, e.g. from underneath the vehicle 52. In this way there is no direct line of sight between the electrode pairs 18, 22 and electrical equipment (not illustrated in figure 7), which is in close proximity to the rails 54.

The electrode pairs 18, 22 are therefore overlapped by the Faraday enclosure 40, when viewed perpendicular to the following planes: a viewing plane that is above and parallel to a surface 26 that the apparatus is arranged on; a viewing plane normal to the longitudinal direction 100; a plane normal the lateral direction 102.

The Faraday enclosure 40 includes a movable front portion 76, which is movable to facilitate insertion of the plant 14 into the treatment mouth 72. The front portion 76 is made from a flexible material, including a thin metal layer deposited on a flexible carrier layer, such as rubber.

In variant embodiments, which are not illustrated: the movable front portion is made from a rigid material which is pivotably connected to the vehicle; the movable portion is omitted; other portions of the Faraday enclosure are implemented as movable, including the back portion (not illustrated) which is arranged opposed the front portion; a ground extending member may be implemented as discussed for the rail vehicle embodiment.

Hand held implementation of apparatus

Referring to figure 10, a handheld implementation of the apparatus 2, typically for domestic use, comprises the applicator unit 6 with the body 20 arranged with a handle portion. An extension 106 extends from proximal the body 20. At a distal end of the extension 106 the applicator electrode 18 is arranged. The extension 106 carries the Faraday enclosure 40 to enclose the applicator electrode 18. The Faraday enclosure 40 is arranged as a cone that encloses the applicator electrode **18** on all sides except the treatment mouth **72**.

In variant embodiments, which are not illustrated, the Faraday enclosure is alternatively shaped, including: hemispherical; frustoconical; other shape.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving radio waves. Therefore, for example, a chip or other device or component for realizing embodiments could generate data for output to another chip, device or component, or have as an input data from another chip, device or component, and such an output or input could be referred to as "transmit" and "receive" including gerund forms, that is, "transmitting" and "receiving", as well as such "transmitting" and "receiving" within an RF context.

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the example(s), embodiment(s), or dependency of the claim(s). Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', 'one' or 'some' embodiment(s) may be a reference to any one or more, and/or all embodiments, or combination(s) thereof, disclosed. Also, similarly, the reference to "the" embodiment may not be limited to the immediately preceding embodiment.

As used herein, any machine executable instructions, or compute readable media, may carry out a disclosed method, and may therefore be used synonymously with the term method, or each other.

The foregoing description of one or more implementations provides illustration and description, but is not intended to be exhaustive or to limit the scope of the invention to the precise form disclosed. Modifications and variations are possible in light of the above teachings or may be acquired from practice of various implementations of the present disclosure.

## LIST OF REFERENCES

2 Electrical apparatus

    4 Electrical energy supply unit

        28 Power supply
        32 Electrical energy processing unit

            33 Wave form shaping/Switching system
            34 Electrical transformer

    6 Applicator unit

        18 Applicator electrode
        20 Body
        56 Extension

    8 Return unit

        22 Return electrode

        24 Body

**10** Electrical energy
**30** Supply electrical energy
**12** Transmission circuit
**16** Electrical circuitry

**14** Plant

**26** Ground

## Claims

1. Electrical apparatus to kill a plant or at least attenuate plant growth, the apparatus comprising:

   an electrical energy supply unit;
   an applicator unit comprising one or more applicator electrode;
   a return unit comprising one or more return electrode;
   the electrical energy supply unit arranged to apply electrical energy through a transmission circuit comprising the applicator electrode, a plant, and the return electrode,
   a Faraday enclosure arranged to block electromagnetic radiation emitted from the electrical energy.

2. The apparatus of claim 1, wherein the Faraday enclosure is arranged to block electromagnetic radiation emitted from the electrical energy proximal to and through the or each applicator electrode and/or the or each return electrode.

3. The apparatus of any preceding claim, wherein the Faraday enclosure is arranged to block electromagnetic frequencies of:
   30 MHz - 6 GHz so that they are below 50 dB($\mu$V/m) when measured 10 m away from the or each applicator electrode and/or the or each return electrode.

4. The apparatus of any preceding claim, wherein the Faraday enclosure if formed of a material with a magnetic relative permeability of at least 0.99 and an electrical resistivity of less than 500,000 x $10^{-8}$ $\Omega \cdot$m.

5. The apparatus of any preceding claim, wherein a material forming the Faraday enclosure has a thickness (t) in m that is defined by the relationship:
   t> 3D,

   $$D = \sqrt{\frac{1}{F \cdot P \cdot C \cdot \pi}},$$

   wherein F is the frequency in Hz, P is the magnetic permeability in H/m, which is calculated by multiplying the relative magnetic permeability $\mu_r$ by the permeability constant $\mu_0$ in H/m, and C is the electrical conductivity in S/m.

6. The apparatus of either of any preceding claim, wherein the Faraday enclosure is arranged with a first layer and a second layer, wherein a gap is arranged between the first layer and second layer.

7. The apparatus of any preceding claim, wherein the Faraday enclosure is electrically isolated from the transmission circuit.

8. The apparatus of any preceding claim, wherein a material of the Faraday enclosure is arranged as:

   a Faraday shield with a continuous covering of electrically conductive material, and/or;
   as a Faraday cage with a covering of electrically conductive material that comprises a plurality of apertures.

9. The apparatus of any preceding claim, wherein the Faraday enclosure is arranged with a treatment mouth to receive a plant for treatment.

10. The apparatus of clam 9, wherein excluding the treatment mouth, the Faraday enclosure is arranged to enclose the or each applicator electrode and the or each earth electrode without there being a gap or aperture greater than 10 cm diameter or the equivalent area.

11. The apparatus of any of claims 9 to 10, wherein the Faraday enclosure includes a movable portion, which is movable to facilitate insertion of a plant into the treatment mouth.

12. The apparatus of any preceding claim, wherein the Faraday enclosure is arranged to cover the or each applicator and/or the or each earth electrode when viewed perpendicular to one or more of the following viewing planes:

   a viewing plane that is above and parallel to a surface that the apparatus is arranged on to treat plants on;
   a viewing plane, which is defined by a vector of a direction of treatment along which the applicator electrode is moved during treatment and a vector which is perpendicular to a surface that the apparatus is arranged on, and;
   a viewing plane, which is normal to a vector of a direction of treatment along which the applicator electrode is moved during treatment.

13. The apparatus of any preceding claim, wherein the Faraday enclosure is arranged to extend along the ground.

14. A vehicle for running on rails of a railway system, the vehicle comprising the apparatus of any preceding claim, wherein the applicator electrode is arranged to apply the electrical energy to a plant proximal the rails.

15. A method of treating a plant with electrical energy, the method comprising:

applying electrical energy to a plant;
blocking with a Faraday enclosure electromagnetic radiation emitted from the electrical energy.

| | |
|---|---|
| 4 | 6 |
| 16 | 8 |

2

## Figure 1

| | |
|---|---|
| 4 | 6 |

16

14

10    12

8

## Figure 2

Figure 3

Figure 4

## Figure 5

Figure 6A          Figure 6B          Figure 6C

Figure 7

Figure 8

Figure 9

Figure 10

Europäisches
Patentamt

European
Patent Office

Office européen
des brevets

# EUROPEAN SEARCH REPORT

Application Number

EP 20 19 7649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 684 270 A1 (AEROSPATIALE [FR]) 4 June 1993 (1993-06-04) * page 1, line 30 - page 2, line 1 * * page 2, line 12 - page 3, line 5 * * page 3, lines 19-31 * * page 4, lines 19-28 * * page 4, line 31 - page 5, line 6 * * page 5, line 28 - page 6, line 15 * * page 6, lines 22-34 * * figures 1,2 * | 1-15 | INV. A01M21/04 |
| X<br>A | DE 23 28 705 A1 (KRAUSE GERHARD) 2 January 1975 (1975-01-02) * page 2, line 21 - page 3, line 20 * * page 4, lines 1-6 * * page 6, lines 22-28 * * figures 1,2 * | 1-5,7,8, 12-15<br>6,9,10 | |
| A | CH 707 476 A2 (SCHÄDLER WALTER [LI]) 31 July 2014 (2014-07-31) * page 3, paragraphs 23,24,26,27 * * page 3, paragraph 28 - page 4, paragraph 29 * * page 4, paragraphs 31,32,34 * * page 4, paragraph 36 - page 5, paragraph 37 * * page 5, paragraph 39 * * page 6, lines 53,56,57 * | 1-15 | |

TECHNICAL FIELDS
SEARCHED (IPC)

A01M

The present search report has been drawn up for all claims

| Place of search | Date of completion of the search | Examiner |
|---|---|---|
| Munich | 9 March 2021 | Schlichting, N |

## ANNEX TO THE EUROPEAN SEARCH REPORT
## ON EUROPEAN PATENT APPLICATION NO.

EP 20 19 7649

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2021

| Patent document cited in search report | | Publication date | Patent family member(s) | Publication date |
|---|---|---|---|---|
| FR 2684270 | A1 | 04-06-1993 | NONE | |
| DE 2328705 | A1 | 02-01-1975 | NONE | |
| CH 707476 | A2 | 31-07-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4338743 A